# EUROPEAN PATENT APPLICATION

(11) **EP 0 573 049 A1**
(43) Date of publication of application: **08.12.1993**
(21) Application number: 93108960.1
(22) Date of filing: 03.06.1993
(51) Int. Cl.: B65G 59/06

(54) **A method and a device in the unloading of a crate stack**

(30) Priority: 05.06.1992 FI 922627
(71) Applicant: HALTON SYSTEM OY, SF-18100 Heinola (FI)
(72) Inventor: Tähkänen, Pekka, SF-18150 Heinola (FI); Paavola, Hannu, SF-18100 Heinola (FI)
(74) Representative: Tiedtke, Harro, Dipl.-Ing.

(57) **Abstract**

The invention relates to a method for unloading a crate stack (K). In the method, a crate stack (K) is placed along a conveyor track (13) into an unloader (10) into a free space between vertical walls (11c₁, 11c₂) of a frame of the unloader, and the conveyor track (13) and the crate stack (K) on top of it are lifted by means of a carriage (12) to an upper position. In the method, the lowermost crate is then lowered to the lower position of the unloader, whereby it transfers away from the connection of the unloader.

## Description

The invention relates to a method and a device in the unloading of a crate stack.

No satisfactory device solutions are known from prior art, by means of which a single empty crate may be fed to a crating unit e.g. for crating empty bottles.

In this application, a new method and a device have been described, by means of which a single crate may be fed from a crate stack for further handling.

According to the invention, a new method and device solution have been developed. The crate stack is guided between vertical walls of a crate-stack unloader, after which lifting of the crate stack is performed. The crate stack is lifted to an upper position on a retainer part, after which the lowermost crate in the crate stack is lowered to a lower position, whereby it transfers gravitationally away from the connection of the unloader on top of a slanting conveyor track.

The inventive method is mainly characterized in that the method comprises the following steps:
- a crate stack is placed along a conveyor track into an unloader into a free space between vertical walls of a frame of the unloader,
- in the method, the conveyor track and the crate stack on top of it are lifted by means of a carriage to an upper position and the crate stack is locked up by placing a retainer below an upper bow of the second lowermost crate,
- in the method, the lowermost crate is lowered to the lower position of the unloader, whereby it transfers away from the connection of the unloader, after which the carriage and the conveyor track thereon are again lifted to the upper position and the crate stack is raised, whereby the lowermost crate is released from the retainer, after which said lowermost crate is lowered to the lower position, whereby, when lowering the lowermost crate to the lower position, the remaining crate stack is again placed on the retainer.

The inventive device is mainly characterized in that the device comprises in a carriage such a conveyor track, which, when the carriage is in the lower position, is slanting relative to the horizontal plane, and when the carriage has been lifted off the lower position, has positioned on the horizontal plane, whereby the crate stack on top of the carriage is aligned.

The invention is next described with reference to certain preferred embodiments of the invention shown in the figures of the accompanying drawings, to which the invention is, however, not intended solely to be limited.

Fig. 1A shows axonometrically an inventive crate-stack unloader.

Fig. 1B shows the device solution of Fig. 1A seen from the direction of an arrow K₁.

Fig. 1C shows a section I-I of Fig. 1A. Three crates are shown.

Fig. 1D shows the connection of a drive motor to a drive wheel.

Fig. 1E is an axonometric representation of a carriage of the inventive crate-stack unloader.

Fig. 1F shows, how the carriage picks up the lowermost crate from the crate stack, when the carriage is guided in a vertical way 21 of a frame 11b.

Fig. 2A-2C show the inventive method by steps.

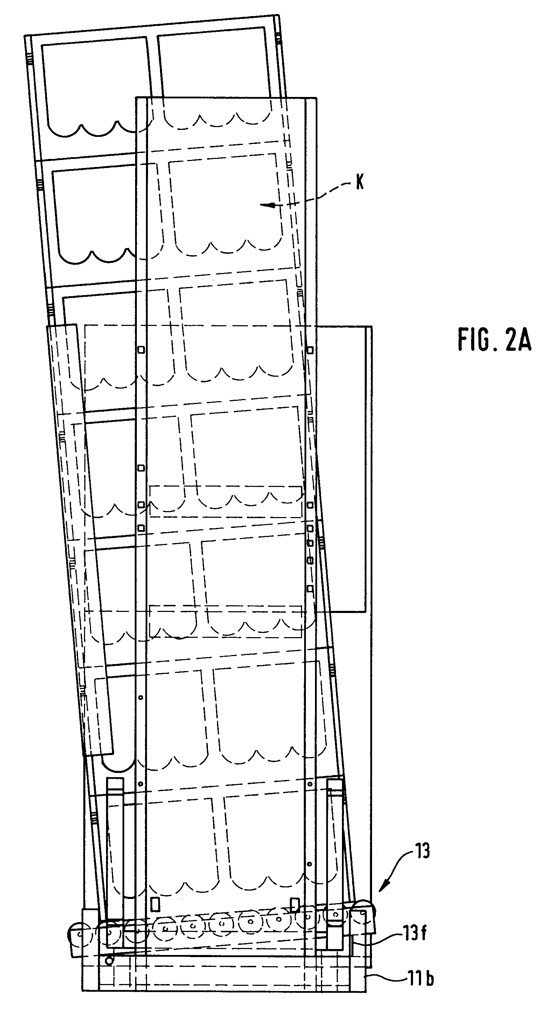

In Fig. 2A, a crate stack K is brought to the inventive unloader.

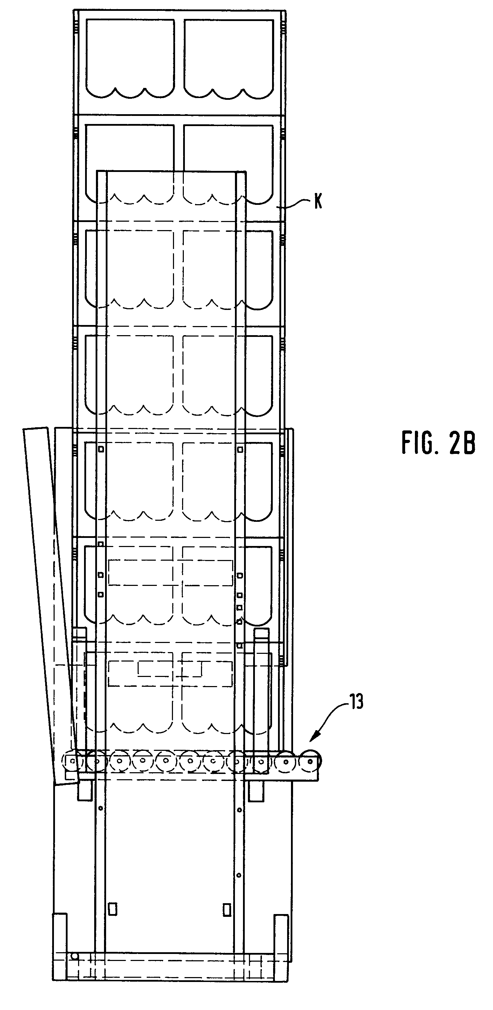

In Fig. 2B, the crate stack brought to the unloader is lifted to an upper position.

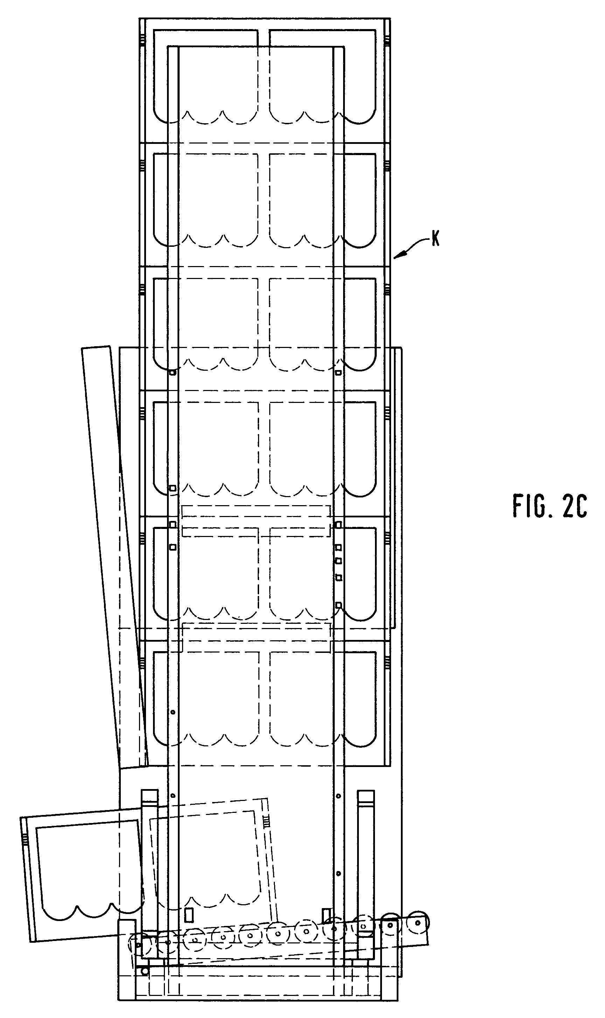

In Fig. 2C, the lowermost crate is released from the crate stack, whereby it by means of a slanting roller track is transferred away from the lower position, whereby the carriage may pick up the next lowermost crate of the crate stack.

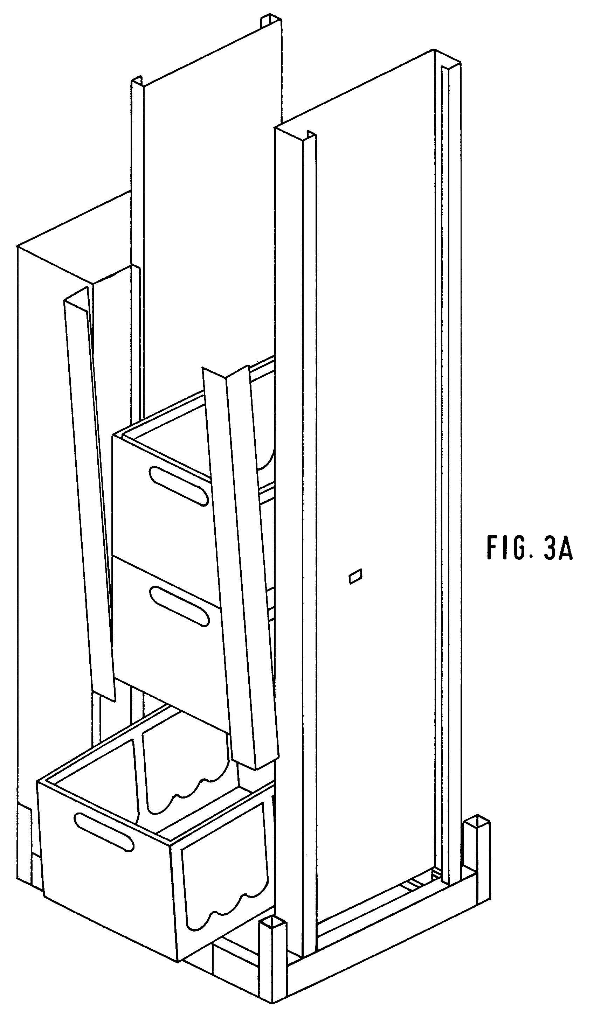

Fig. 3A shows axonometrically the transfer of the lowermost crate away from the roller track.

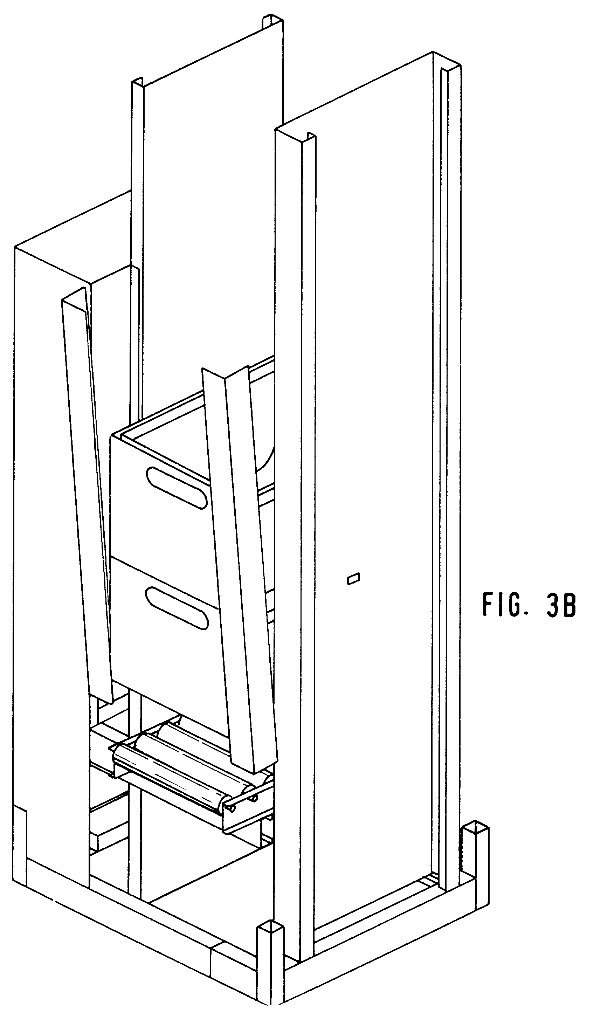

In Fig. 3B, the carriage picks up the lowermost crate of the crate stack.

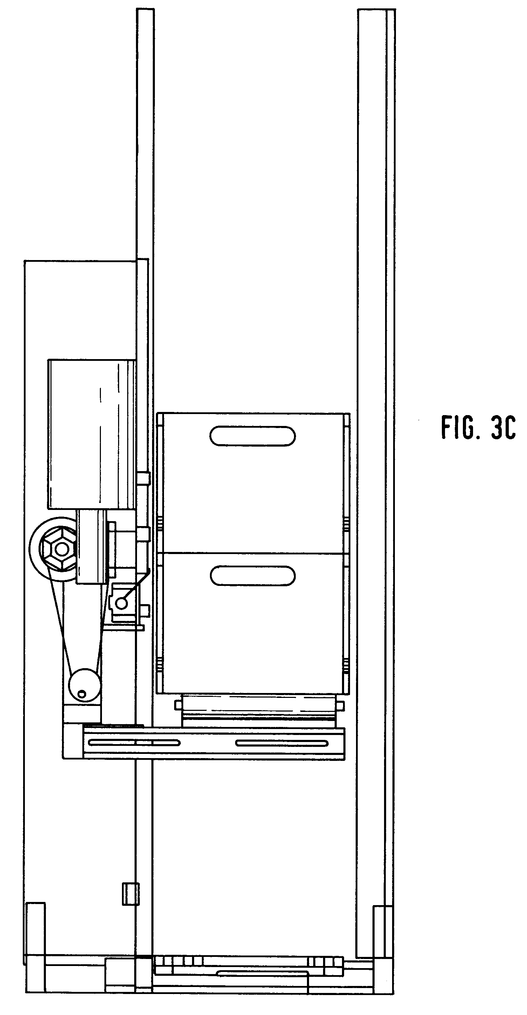

Fig. 3C shows a step following to Fig. 3B, in which step the carriage releases the retainer from the lowermost crate, whereby the lowermost crate may transfer, lowered by the carriage, to a lower position and further, when the roller track positions into a slanting position, gravitationally away from the roller track.

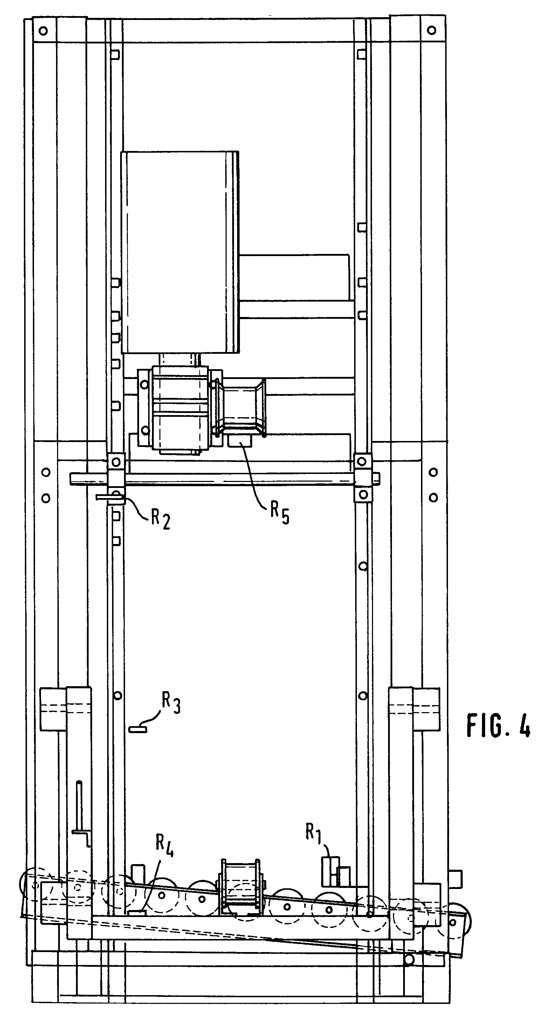

Fig. 4 shows the locations of the limits and photocells.

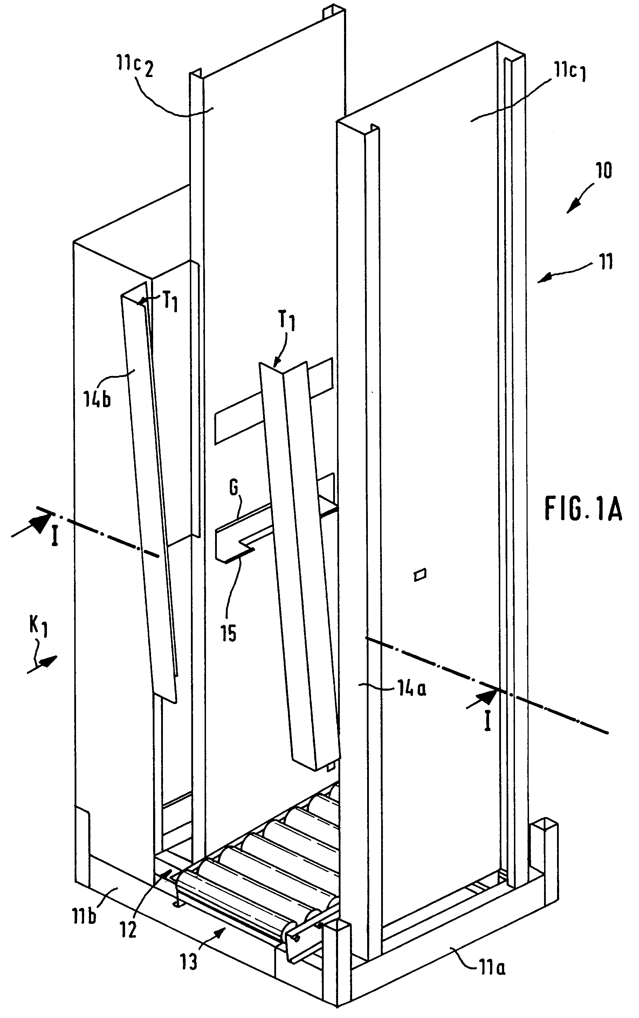

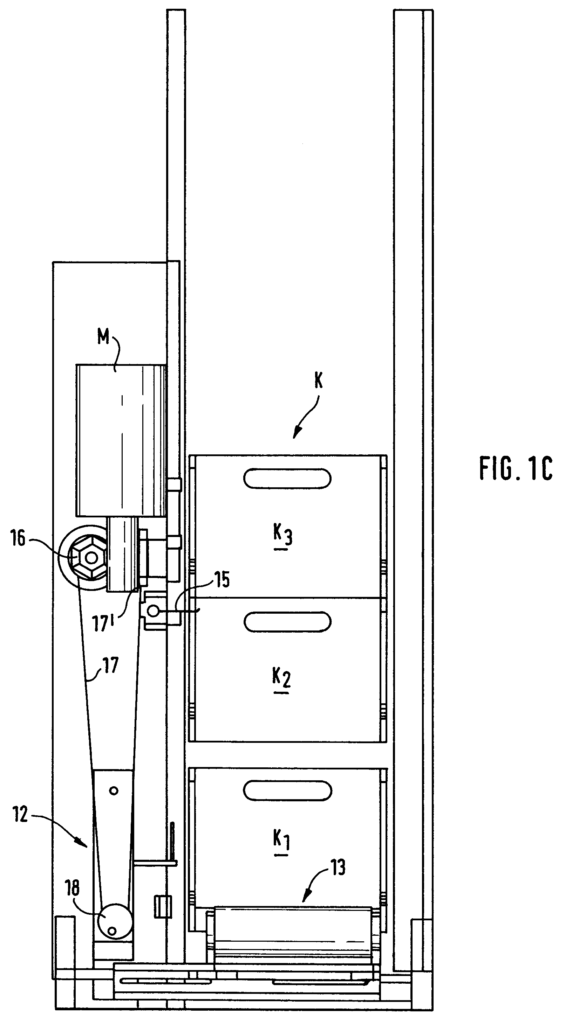

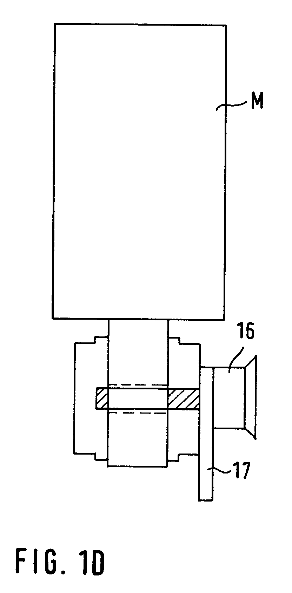

Fig. 1A shows axonometrically an inventive crate-stack unloader 10. The crate-stack unloader 10 comprises a frame 11 and therein a first frame section 11a and a second frame section 11b, which may be adjusted into a position relative to each other determined by the width of a crate K and locked into said position by means of screws N.

The frame comprises in the first frame section 11a a vertical wall 11c₁ and in the second frame section 11b a vertical wall 11c₂. The device comprises a carriage 12 liftable and lowerable in a vertical direction, which comprises a conveyor track 13. The conveyor track 13 may be a track of any type, preferably a roller track.

The inventive device solution further comprises a vertical stop 14a in the frame section 11a and a vertical stop 14b in the frame section 11b. The stops 14a and 14b comprise vertical levels T₁, T₂, against which the crate stack K positions gravitationally, when the crate stack is brought along the slanting roller track 13 to the connection of the device.

The vertical levels T₁, T₂ are slanting relative to the vertical plane and correspond to the tilting angle of a roller level E₁ of the roller track 13.

As shown in Fig. 1A, the vertical wall 11c₁ comprises an opening G, from which a crate retainer, preferably a retainer flap 15, may be brought to the connection of an upper bow S of the crate K.

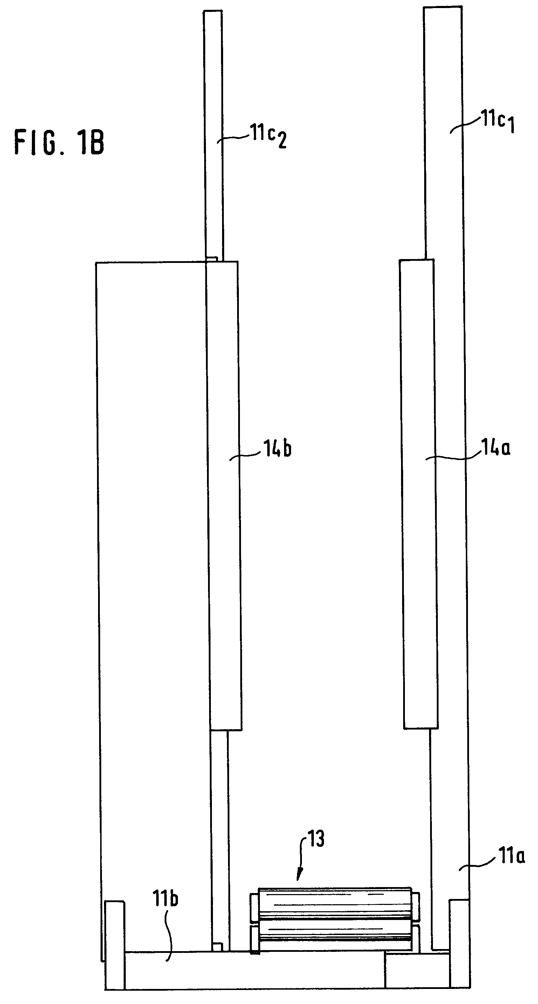

Fig. 1B shows the device seen from the direction of an arrow K₁ of Fig. 1A. The crate stack K is brought to the connection of the roller track 13, which in its lowermost position is by its rolling level E₁ slanting relative to the horizontal level. In this case, the crate stack K presses by action of gravity against the stops 14a, 14b and their levels T₁ and T₂.

Fig. 1C shows three crates K₁, K₂ and K₃ of the crate stack K between the vertical walls 11c₁ and 11c₂ on top of the rollers of the roller track 13. In a step shown in Fig. 1C, the crates K₃ and K₂ are kept on the retainer 15, as the lowermost crate is brought to the lower position on the carriage 12. The carriage 12 comprises a sheave 18, around which is led a belt 17, which by its one end 17' is fixedly joined to the frame 11 and by its other end to a drive wheel 16, which is rotated by a motor M. Thus, when lifting the carriage 12, the drive wheel 16 is rotated either directly or via a gearing and the belt 17 is wound around the drive wheel 16. In this way, the carriage 12 is lifted by means of the belt 17.

Fig. 1D shows the connection of an outlet shaft M₁ of the motor M to a shaft 16a of the drive wheel 16.

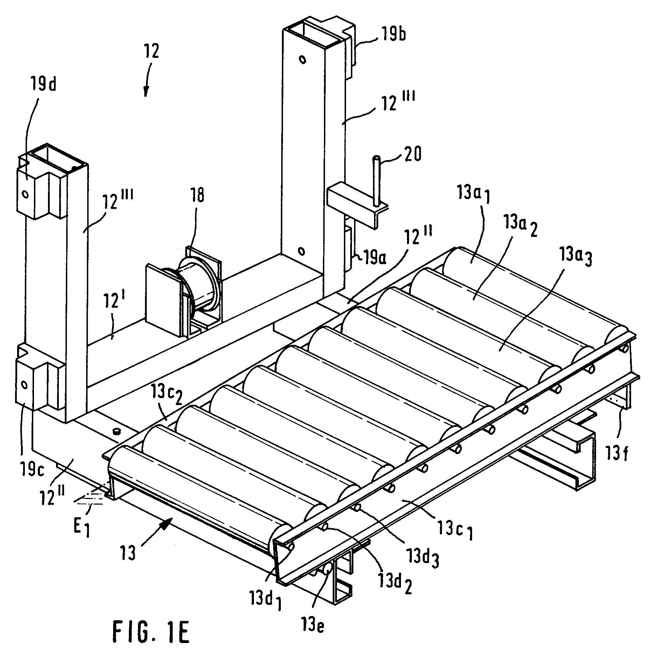

Fig. 1E shows the carriage 12 as a separate view and axonometrically. The carriage 12 comprises on top of frame beams 12a'' a roller track 13. On a horizontal beam 12a' is located a sheave 18. On vertical beams 12a''' are located slide pieces 19a, 19b, 19c, 19d, which slide in a way 21 of a frame 11'''.

The roller track 13 comprises rollers 13a₁, 13a₂, 13a₃... rotating on shafts 13d₁, 13d₂... The shafts 13d₁, 13d₂... of the rollers are rotatably connected to side beams 13c₁ and 13c₂. The beams 13c₁ and 13c₂ are articulated to turn on a hinge 13e. To the opposite end of the beams 13c₁, 13c₂ is joined a longitudinally adjustable raising piece 13f, which, when the roller track 13 and the carriage 12 are in their lowermost position, positions on top of the horizontal beam 11b'. Then, the level E₁ of the roller track may be brought into a slanting angle (shown in Fig. 2A) relative to the horizontal plane. The raising piece 13f may be e.g. a two-part plate, whose parts are by means of screw devices locked relative to each other for adjusting the length of the raising piece 13f.

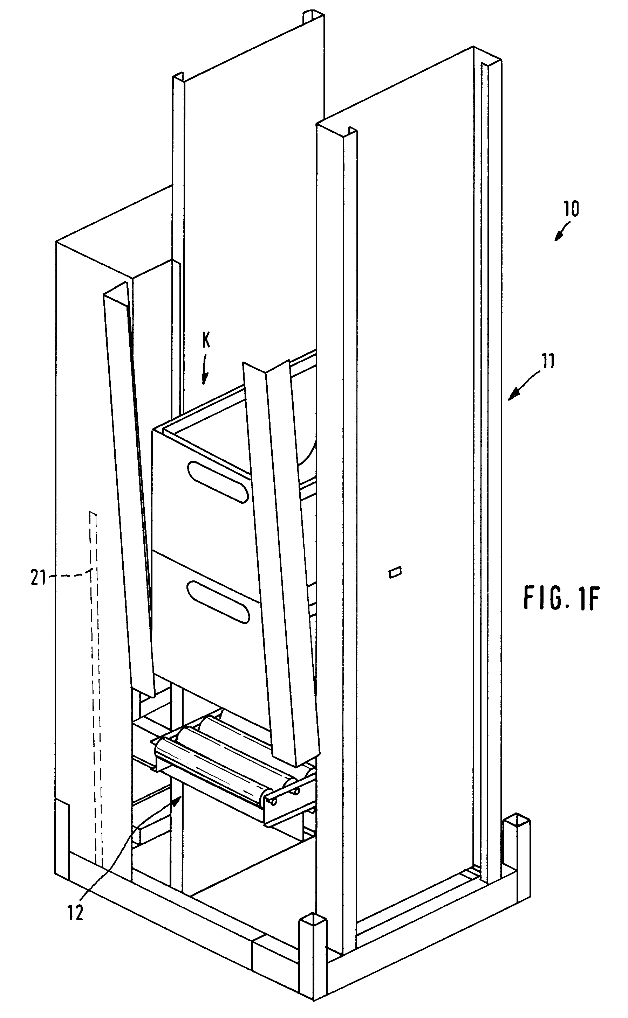

Fig. 1F shows the lifting and lowering of the carriage 12 on the ways 21 of the frame 11. The ways 21 are shown schematically by dashed lines.

Fig. 2A shows a step of the inventive method, in which step the crate stack K is brought to the connection of the crate-stack unloader. The level E₁ of the roller track is slanting relative to the horizontal level, whereby the crate stack K presses against the vertical stops 14a, 14b.

Fig. 2B shows a step, in which the crate stack is lifted by means of the carriage 12 to an upper position of the carriage 12.

Fig. 2C shows a step, in which the carriage 12 has brought the lowermost crate to a lower position, and when the roller track 13 again positions onto a slanting level E₁ relative to the horizontal plane, the lowermost crate K₁ advances from the crate stack K to e.g. crating, in which an empty bottle crate is filled with empty or filled bottles.

Fig. 3A shows axonometrically a step corresponding to Fig. 2C, in which step the lowermost crate K₁ is gravitationally removed from the crate-stack unloader 10. In Fig. 1C is shown in section a step corresponding to Fig. 3A, in which crates K₂ and K₃ are kept on the crate retainer flap 15 and in which the lowermost crate K₁ transfers along the roller track 13 away from the connection of the device.

Fig. 3B shows a step, in which the carriage 12 picks up a crate K₂.

Fig. 3C shows a step following Fig. 3B, in which a lifter 20 releases the crate K₁ by lifting the retainer flap into an upper position. The retainer 15 is maintained in the upper position, until a lowering crate K₃ may be brought onto the retainer 15. When the lowermost crate K₃ of the crate stack is picked up, the retainer 15 does no longer position into the lower position, but the retainer actuator 15a keeps it in the upper position so that the next crate stack K may be received.

Fig. 4 shows the locations of the limits and photocells R₁, R₂, R₃, R₄ and R₅.

The inventive method may thus be described in steps:
- The crate stack K flows freely along a slanting track 13 into an unloader 10. The crate stack K advances such far that it collides with vertical guides 14a, 14b. A photocell R₁ simultaneously senses that a crate stack has arrived at the unloader 10.
- The carriage 12 is lifted up, whereby the crate stack lifts with the carriage. The roller track 13 is articulated such that when the carriage 12 lifts up, the track 13 positions on a horizontal level, whereby the crate stack K is aligned. The carriage 12 lifts up to a set upper limit R₂, after which the carriage 12 is lowered down by means of the motor M.
- When moving down, the carriage 12 releases at a set limit R₃ a crate retainer flap 15 such that the flap locks the second lowermost crate in place from its upper bow S. The lowermost crate continues to move down with the carriage 12.
- When the carriage comes down, the track 13 enters into a slanting position, whereby the crate K on top of it flows along the slanting track 13 away from the unloader 10.
- When the photocell R₁ senses that the crate K has departed from top of the roller track, the carriage 12 rises up to pick up a new crate.
- The carriage lifts again to the set upper turning limit R₂, at which the carriage 12 slightly raises the crates on the retainer flap 15 and a lifter 20 on the carriage lifts the retainer flap 15 up into locking and releases the crate stack.
- After this, the operating sequence continues, as described above. The operating sequence is repeated, until the photocell R₅ senses that there is only one crate above. When the carriage 12 is lowered down and it picks up the last crate, the retainer flap is no longer released, but it remains behind the vertical walls so that a new crate stack K may freely flow into the unloader 10.
- When the last crate has departed from the unloader 10, a new crate stack K may enter into the unloader.

The invention relates to a method for unloading a crate stack (K). In the method, a crate stack (K) is placed along a conveyor track (13) into an unloader (10) into a free space between vertical walls (11c₁, 11c₂) of a frame of the unloader, and the conveyor track (13) and the crate stack (K) on top of it are lifted by means of a carriage (12) to an upper position. In the method, the lowermost crate is then lowered to the lower position of the unloader, whereby it transfers away from the connection of the unloader.

## Claims

1. A method for unloading a crate stack (K), **characterized** in that the method comprises the following steps:
- a crate stack (K) is placed along a conveyor track (13) into an unloader (10) into a free space between vertical walls (11c₁, 11c₂) of a frame of the unloader,
- in the method, the conveyor track (13) and the crate stack (K) on top of it are lifted by means of a carriage (12) to an upper position and the crate stack (K) is locked up by placing retainer (15) below an upper bow (S) of the second lowermost crate,
- in the method, the lowermost crate is lowered to the lower position of the unloader, whereby it transfers away from the connection of the unloader, after which the carriage (12) and the conveyor track thereon are again lifted to the upper position and the crate stack (K) is raised, whereby the lowermost crate is released from the retainer, after which said lowermost crate is lowered to the lower position, whereby, when lowering the lowermost crate to the lower position, the remaining crate stack (K) is again placed on the retainer (15).

2. A method according to the previous Claim, **characterized** in that in the method is used such a conveyor track (13), which in its lower position positions on slanting level relative to the horizontal plane, whereby a crate in its lower position may gravitationally transfer away from top of the conveyor track (13), and that when the carriage is lifted, the conveyor track (13) on the carriage positions in a horizontal position, whereby the crate stack on the conveyor track (13) is aligned.

3. A method according to Claim 1 or 2, **characterized** in that in the method, by means of a lifter (20), preferably a pin or the like, on the carriage, the retainer flap (15) or the like is lifted to an upper position, when the carriage (12) is transferred upwards, and the crate (K) is released from the retainer (15), and that when the last crate of the crate stack is concerned, the retainer (15) is kept by means of an actuator (15a) of the retainer (15) in a position, in which the next crate stack (K) may be freely transferred into a space between the vertical frames, whereby the retainer (15) is located behind a vertical frame (11c₂) away from the free space between the vertical frames (11c₁, 11c₂).

4. A device for unloading a crate stack (K), which device comprises a frame (11) and therein vertical walls (11c₁, 11c₂), and the crate stack (K) may be placed in a free space therebetween, and that the device comprises a carriage (12), on top of which there is a conveyor track (13), **characterized** in that the device comprises on the carriage (12) such a conveyor track (13), which, when the carriage (12) is in the lower position, is slanting relative to the horizontal plane, and when the carriage (12) is lifted away from the lower position, has positioned on the horizontal plane, whereby the crate stack (K) on top of the carriage (12) is aligned.

5. A device according to the previous Claim, **characterized** in that the conveyor track is a roller track (13), which comprises rollers (13a, 13a₁, 13a₂, 13a₃...), which are fitted to rotate on their shafts (13d₁, 13d₂...) on beams (13c₁, 13c₂), and that the structure is fitted to turn on a hinge (13e) and that in connection with the beams (13c₁, 13c₂) is fitted a raising piece (13f), which positions, when the carriage (12) is in its lower position, on a horizontal beam (11b') of the frame (11) such that when the carriage (12) is raised, the roller track (13) turns on the hinge (13e) into a horizontal position.

6. A device according to the previous Claim, **characterized** in that the raising piece (13f) is adjustable, whereby the length of the piece (13f) may be adjusted as well as that angle, into which the roller track (13) positions, as the carriage (12) is in the lower position.

7. A device according to any of the previous Claims, **characterized** in that the device comprises a motor (M), which is fitted to rotate a sheave (16), to which is fixed a belt (17) by its one end, as the other end (17') is fixed above to the frame (11), and that the belt (17) is led over a sheave (18), which sheave (18) is located in a fixed position on the carriage (12), whereby by driving the motor (M), the belt (17) is wound around the drive wheel (16) and the carriage (12) is lifted and by rotating the motor (M) in the opposite direction, the belt (17) is released from the drive wheel (16) and the carriage (12) is lowered.

8. A device according to any of the previous Claims, **characterized** in that the carriage (12) comprises a lifter (20), preferably a pin or the like, which affects a retainer (15), preferably a retainer flap, and the retainer flap is transferred away from the connection of the upper bow (S) of the crate.

9. A device according to any of the previous Claims, **characterized** in that the retainer flap (15) comprises an actuator (15a), by means of which the retainer flap may be locked in the closed position and away from the space between the vertical frame sections (11c₁, 11c₂).

10. A device according to any of the previous Claims, **characterized** in that the device comprises vertical stops (14a, 14b) limiting into a free space between the vertical frame parts (11c₁, 11c₂), which stops have been placed in a slanting angle relative to the vertical plane, whereby, when a crate stack (K) is brought to the connection of the device, the crate stack (K) positions against surface levels (T₁, T₂) of the vertical stop parts (14a, 14b).

11. A device according to the previous Claim, **characterized** in that the vertical stops 14a, 14b) have been placed along only a certain distance of the length of the vertical walls (11c₁, 11c₂) to the upper part of the vertical walls (11c₁, 11c₂), whereby a free travelling passage remains for the lowermost crate to travel away from the connection of the device, as the roller track (13) has positioned in a slanting angle relative to the horizontal level, when the carriage (12) is in its lower position.
